# EUROPEAN PATENT APPLICATION

(11) **EP 3 858 612 A1**
(43) Date of publication of application: **04.08.2021**
(21) Application number: 19866252.0
(22) Date of filing: 24.09.2019
(51) Int. Cl.: B32B 27/32, B32B 9/00, B65D 65/40

(54) **LAMINATED FILM AND PACKAGING CONTAINER**

(30) Priority: 28.09.2018 JP 2018184274
(71) Applicant: Toppan Printing Co., Ltd., Tokyo 110-0016 (JP)
(72) Inventor: SUGAYA, Sachiko, Tokyo 110-0016 (JP); SUGANO, Masae, Tokyo 110-0016 (JP)
(74) Representative: Hoffmann Eitle
(86) International application number: PCT/JP2019/037333
(87) International publication number: WO 2020/067047

(57) **Abstract**

In a laminate film in which a gas barrier film, an adhesive layer, and a thermoplastic resin layer are laminated in this order, the adhesive layer includes a layer that contains maleic anhydride graft polymerized polypropylene as a main component, and the maleic anhydride graft polymerized polypropylene has a maleic anhydride graft ratio of 0.1 wt% or more and 1 wt% or less.

## Description

### [Technical Field]

The present invention relates to laminate films and packaging containers using the laminate films.

The present application is based on and claims the benefit of priority from Japanese Patent Application No. 2018-184274 filed in Japan on September 28, 2018, the contents of which are incorporated herein by reference.

### [Background Art]

Packaging materials used for packaging food products, pharmaceutical products, or the like are required to reduce degradation, decomposition, or the like of the contents, and retain the functions and properties of the contents. As a type of such packaging materials, there have been known gas barrier laminate films which prevent entry of gas, such as water vapor or oxygen, that degrades the contents.

For example, PTL 1 describes a laminate film. This laminate film includes a substrate film layer, such as a polyester film, whose outer surface is provided with a barrier layer, i.e., a vapor deposition metal oxide or vapor deposition metal layer, with a sealant layer laminated on an inner surface of the barrier layer via an adhesive layer.

Such laminate films may be required not to cause delamination (separation of a laminated layer) even when subjected to high temperature sterilization, such as retort treatment. In other words, such laminate films may be required to have retort resistance. If the contents are liquid seasonings containing vinegar, oil or the like, or bathing agents containing alcohol, or poultices containing highly-penetrating volatile substances, the laminate films are required to have content resistance to an extent not undergoing delamination due to these contents.

As a generally used configuration for laminate films, there is known a configuration in which a plurality of films are bonded together using a dry lamination adhesive of a urethane two-part curing type or the like.

To impart sufficient retort resistance and content resistance to laminate films having this configuration, a long time is required for the adhesive to cure and accordingly it may be difficult to produce these laminate films in a short time. If such a laminate film is wound on a roll when produced, the wound film may be tightened due to heat during curing and this tightening, which is a load on the film, may damage the film.

As another configuration of the laminate films used for retort packaging materials, there is known a configuration in which an inorganic oxide layer is used as a barrier layer. This type of barrier layers has advantages that they are transparent, can be heated in a microwave oven, have small environmental loads, and the like.

To combine such a barrier layer with a dry laminate as mentioned above, PTL 2 proposes to use maleic anhydride graft polymerized polypropylene for an adhesive layer to control the graft ratio, for improvement of adhesion to the barrier layer.

### [Citation List]

### [Patent Literatures]

PTL 1: JP 2011-46006 A
PTL 2: JP 3430551 B

### [Summary of the Invention]

### [Technical Problem]

As barrier layers of laminate films tend to have more complex structures in recent years, the laminate films may have a configuration in which such a barrier layer is not adjacent to an adhesive layer. Even if the technique described in PTL2 is applied to such a configuration, adhesion cannot be necessarily improved.

In light of the issues set forth above, the present invention aims to provide a laminate film which exhibits excellent adhesion to a wide variety of transparent barrier films and can be easily produced.

The present invention also aims to provide a packaging container that is excellent both in retort resistance and content resistance.

### [Solution to Problem]

In a laminate film according to a first aspect of the present invention, a gas barrier film, an adhesive layer, and a thermoplastic resin layer are laminated in this order, the adhesive layer includes a layer that contains maleic anhydride graft polymerized polypropylene as a main component, and the maleic anhydride graft polymerized polypropylene has a maleic anhydride graft ratio of 0.1 wt% or more and 1 wt% or less.

A packaging container according to a second aspect of the present invention is obtained by producing a pouch using the laminate film of the present invention.

### [Advantageous Effects of the Invention]

The laminate film according to the above aspect of the present invention exerts excellent adhesion to a wide variety of transparent barrier films and can be easily produced.

The packaging container according to the above aspect of the present invention is excellent both in retort resistance and content resistance.

### [Brief Description of the Drawings]

Fig. 1 is a schematic cross-sectional view illustrating a laminate film according to an embodiment.
Fig. 2 is a schematic cross-sectional view illustrating a laminate film according to a modification of an embodiment.
Fig. 3 is a schematic cross-sectional view illustrating a laminate film according to a modification of an embodiment.
Fig. 4 is a schematic cross-sectional view illustrating a laminate film according to a modification of an embodiment.

### [Description of the Embodiments]

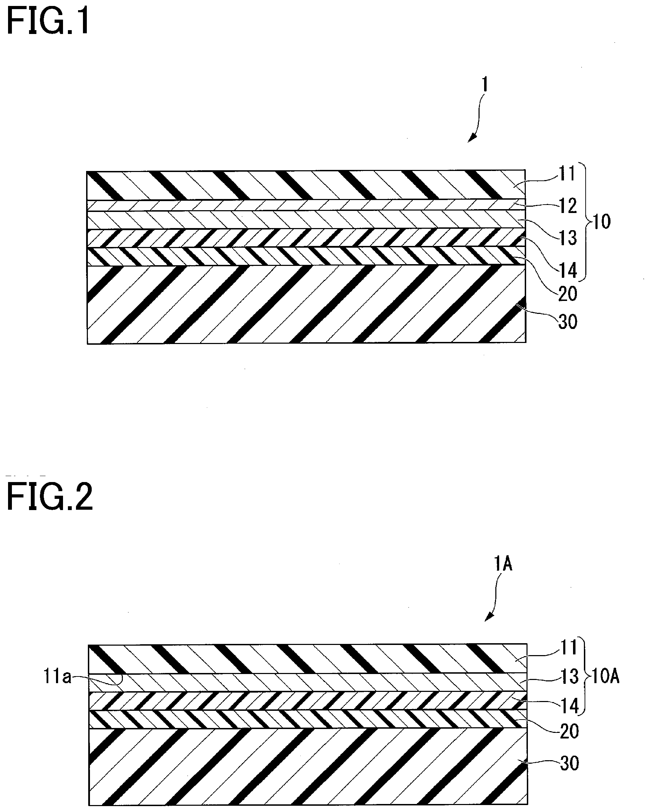

With reference to Figs. 1 to 4, an embodiment of the present invention will be described.

Fig. 1 is a schematic cross-sectional view illustrating a laminate film 1 according to the present embodiment. The laminate film 1 includes a gas barrier film 10, an adhesive layer 20 and a thermoplastic resin layer 30 The laminate film 1 is configured by laminating the adhesive layer 20 and the thermoplastic layer 30 in this order on the gas barrier film 10. The gas barrier film 10 includes a substrate film layer 11, a primer layer 12, a vapor deposition metal oxide layer 13, and a gas barrier coating layer 14. The gas barrier film 10 is configured by laminating the primer layer 12, the vapor deposition metal oxide layer 13, and the gas barrier coating layer 14 in this order on an adhesive layer 20 side surface of the substrate film layer 11.

The substrate film layer 11 may be, for example, a resin film.

Examples of the resin forming the resin film include, but are not particularly limited to, polyolefin resins such as polyethylene terephthalate (PET), polyethylene naphthalate (PEN), polyethylene-2,6-naphthalate, polybutylene terephthalate, and copolymers of these materials; polyolefin resins such as polyethylene, and polypropylene; polyamide resins such as nylon-6, nylon-66, and nylon-12; and hydroxy group-containing polymers such as polyvinyl alcohol, and an ethylene-vinyl alcohol copolymer. Of these resins, PET and polyamide resins are preferred to be used. These resins may be used singly or in combination of two or more.

The substrate film layer 11 may be a stretched film or may be an unstretched film. Of such films, a uniaxially stretched film or biaxially stretched film is preferred, and a biaxially stretched film is more preferred, from the perspective of having high mechanical strength and high dimensional stability.

The substrate film layer 11 may have a single-layer structure formed of one substrate film, or may have a multilayer structure in which two or more substrate films are laminated.

The substrate film layer 11 may have a thickness that is not particularly limited, but is preferred to have a thickness, for example, in the range of 3 µm to 200 µm, and more preferably 6 µm to 30 µm.

The primer layer 12 contains a composite composed of an acrylic polyol, an isocyanate compound, and one or more materials selected from the group consisting of trifunctional organosilanes and hydrolysates thereof. The trifunctional organosilane is preferred to be a compound expressed by the following Formula (1).

R⁵Si(OR⁶)₃ ··· (1)

In Formula (1), R⁵ is any of an alkyl group, vinyl group, alkyl group having an isocyanate group, alkyl group having a glycidoxy group, and an alkyl group having an epoxy group, and R⁶ is an alkyl group.

The alkyl group, vinyl group, alkyl group having an isocyanate group, alkyl group having a glycidoxy group, and an alkyl group having an epoxy group as R⁵ may have a straight chain shape or branched chain shape. Alternatively, they may have a cyclic structure.

Examples of the compound expressed by Formula (1) include ethyltrimethoxysilane, vinyltrimethoxysilane, isocyanatopropyltriethoxysilane, γ-isocyanatopropyltrimethoxysilane, glycidoxypropyltrimethoxysilane, and epoxycyclohexylethyltrimethoxysilane. Of these compounds, isocyanatopropyltriethoxysilane, and γ-isocyanatopropyltrimethoxysilane having an isocyanate group as R⁵, glycidoxytrimethoxysilane having a glycidoxy group as R⁵, and epoxycyclohexylethyltrimethoxysilane having an epoxy group as R⁵ are particularly preferred.

The hydrolysates of trifunctional organosilanes may be obtained through a known method, such as a method in which acid, alkali or the like is directly added to a trifunctional organosilane, followed by hydrolyzing the mixture.

The acrylic polyol is a polymer compound obtained by homopolymerizing or copolymerizing an acrylic acid derivative monomer, or a polymer compound obtained by copolymerizing an acrylic acid derivative monomer with another monomer, and has a hydroxyl group at the end which reacts with an isocyanate group of an isocyanate compound.

Examples of the acrylic acid derivative monomer include ethyl methacrylate, hydroxyethyl methacrylate, hydroxypropyl methacrylate, and hydroxybutyl methacrylate.

As a monomer other than those mentioned above, styrene may be mentioned, for example.

As the acrylic polyol, it is preferred to use a homopolymer of an acrylic acid derivative monomer selected from ethyl methacrylate, hydroxyethyl methacrylate, hydroxypropyl methacrylate, and hydroxybutyl methacrylate, or a copolymer of these acrylic acid derivatives and styrene.

The acrylic polyol is preferred to have a hydroxyl number in the range of 5 KOHmg/g to 200 KOHmg/g, from the perspective of exhibiting good reactivity with an isocyanate compound.

The mass ratio between the acrylic polyol and the trifunctional organosilane is preferred to be in the range of 1/1 to 100/1, and more preferred to be 2/1 to 50/1.

The isocyanate compound has two or more isocyanate groups and reacts with the acrylic polyol to form a urethane bond. The isocyanate compound serves as a crosslinking agent or a curing agent to enhance adhesion between the substrate film layer 11 and the vapor deposition metal oxide layer 13.

Examples of the isocyanate compound include aromatic isocyanate compounds such as tolylene diisocyanate (TDI), and diphenylmethane diisocyanate (MDI); aliphatic isocyanate compounds such as xylene diisocyanate (XDI), and hexalenedisocyanate (HMDI); and polymers having an isocyanate group obtained by polymerizing the aromatic or aliphatic isocyanate compounds with polyol, and derivatives thereof. These isocyanate compounds may be used singly or in combination of two or more.

As the mixing ratio between the acrylic polyol and the isocyanate compound, it is preferred that the number of isocyanate groups derived from the isocyanate compound is 50 times or less the number of hydroxyl groups derived from the acrylic polyol, and it is more preferred that the number of isocyanate groups is equal to the number of hydroxyl groups. This may easily reduce the occurrence of poor curing that would be caused by an excessively low ratio of the isocyanate compound, or processing difficulty due to blocking that would be caused by an excessively high ratio of the isocyanate compound.

The composite is obtained by reacting an acrylic polyol, an isocyanate compound, and one or more materials selected from the group consisting of trifunctional organosilanes and hydrolysates thereof, in a solvent.

Examples of the solvent include esters such as ethyl acetate and butyl acetate; alcohols such as methanol, ethanol, and isopropyl alcohol; ketones such as methyl ethyl ketone; and aromatic hydrocarbons such as toluene and xylene, but are not particularly limited to these materials as long as the solvent can dissolve and dilute the individual components. These solvents may be used singly or in combination of two or more. If an aqueous solution such as hydrochloric acid is used for hydrolyzing a trifunctional organosilane, it is preferred to use a solvent, as a cosolvent, obtained by arbitrarily mixing isopropyl alcohol or the like with ethyl acetate as a polar solvent.

When preparing the composite, a catalyst may be added to the reaction solution to promote reaction between the trifunctional organosilane and the acrylic polyol. The catalyst is preferred to be a tin compound such as tin chloride (SnCh or SnCl₄), tin oxychloride (SnOHCl or Sn(OH)₂Cl₂), or tin alkoxide. These catalysts may be directly added when mixing the individual components, or may be dissolved in a solvent such as methanol and then added.

The additive amount of the catalyst in terms of a molar ratio relative to the total mass of the trifunctional organosilane and a hydrolysate thereof is preferred to be in the range of 1/10 to 1/10,000, and more preferred to be 1/100 to 1/2,000.

To improve stability of the solution containing the composite, a metal alkoxide or a hydrolysate thereof may be added.

The metal alkoxide may be a compound expressed by a general formula M(OR)ₙ (where M is Si, Al, Ti or Zr, and R is an alkyl group such as a methyl group or ethyl group), such as tetraethoxysilane [Si(OC₂H₅)₄], or tripropoxyaluminum [Al(OC₃H₇)₃]. Of these compounds, tetraethoxysilane, tripropoxyaluminum, or a mixture thereof is preferred because of being comparatively stable in an aqueous solution.

The method of obtaining a hydrolysate of the metal alkoxide may be similar to the method of obtaining a hydrolysate of the trifunctional organosilane. The metal alkoxide may be hydrolyzed together with the trifunctional organosilane, or may be hydrolyzed separately from the trifunctional organosilane.

From the perspective of solution stability, the trifunctional organosilane and the metal alkoxide are preferred to have a molar ratio in the range of 10:1 to 1:10, and more preferably 1:1.

Various additives may be added to the primer layer 12. Examples of the additives include curing accelerators such as a tertiary amine, imidazole derivative, metal salt compound of carboxylic acid, quaternary ammonium salt, and quaternary phosphonium salt; antioxidants such as a phenol-, sulfur-, or phosphite-based antioxidant; leveling agents; viscosity modifiers; catalysts; crosslinking accelerators; and fillers.

The method of forming the primer layer 12 is not particularly limited. For example, the method may be one in which a solution is applied to the substrate film layer 11, followed by drying. This solution is obtained by mixing an acrylic polyol or an isocyanate compound into a solution of a hydrolyzed trifunctional organosilane, or into a solution of a trifunctional organosilane hydrolyzed with a metal alkoxide, in the presence of a catalyst which is used as necessary. Alternatively, the method may be one in which a solution is applied to the substrate film layer 11, followed by drying. This solution is obtained by adding an isocyanate compound to a solution obtained by mixing a trifunctional organosilane and an acrylic polyol in a solvent, or to a solution obtained by hydrolyzing the mixed solution, in the presence of a catalyst or a metal alkoxide which is used as necessary.

The application method is not particularly limited, but may be, for example, dipping, roll coating, gravure coating, reverse coating, air knife coating, comma coating, die coating, screen printing, spray coating, gravure offset printing, or the like.

The drying method may be hot air drying, hot roll drying, high frequency irradiation, infrared irradiation, UV irradiation, or the like, i.e., a method in which the solvent molecules are removed with heat. Two or more of these methods may be combined.

The vapor deposition metal oxide layer 13 is formed by depositing a metal oxide. The metal oxide may be, for example, a silicon oxide, aluminum oxide, or the like, of which aluminum oxide is preferred.

The method of forming the vapor deposition metal oxide layer 13 is not particularly limited, but may be, for example, vacuum deposition, sputtering, or the like.

The vapor deposition metal oxide layer 13 is preferred to have a thickness in the range of 100 Å to 500 Å, and more preferably 150 Å to 300 Å. If the thickness of the vapor deposition metal oxide layer 13 is not less than the lower limit, barrier properties can be secured. If the thickness of the vapor deposition metal oxide layer 13 is not more than the upper limit, transparency can be secured.

The gas barrier coating layer 14 is in contact with the adhesive layer 20.

The gas barrier coating layer 14 is configured to contain a silicon oxide component, vinyl alcohol component, isocyanate component, and silane coupling agent component.

As the silicon oxide component, a silicon compound expressed by a general formula Si(OR¹)₄ (where R¹ is CH₃, C₂H₅ or C₂H₄OCH₃), or a hydrolysate thereof may be used. Specific examples thereof include alkyl silicates such as a tetraalkoxysilane, i.e. a metal alkoxide, alkyltrialkoxysilanes, dialkyldialkoxysilanes, and hydrolysates thereof.

Examples of the vinyl alcohol component may include a polyvinyl alcohol, polyvinyl acetate, and ethylene-vinyl acetate copolymer. The vinyl alcohol component may be a water-soluble polymer having a hydroxyl group.

The isocyanate component may be tolylene diisocyanate, xylylene diisocyanate, or the like.

As the silane coupling agent component, for example, a silicon compound expressed by a general formula (R²Si(OR³)₃)ₙ (where R³ is CH₃, C₂H₅ or C₂H₄OCH₃, R² is an organic functional group, and n is 1 or more), or a hydrolysate thereof may be used. Specifically, an epoxy silane coupling agent, amine silane coupling agent, vinyl silane coupling agent, acrylic silane coupling agent, or the like may be mentioned. Alternatively, trimeric 1,3,5-tris (3-trialkoxysilylalkyl) isocyanurate expressed by a formula (NCO-R⁴Si(OR³)₃)₃ (where R⁴ is (CH₂)ₙ, and n is 1 or more) may be used.

A silane coupling agent having an isocyanate group may be used as a compound serving both as an isocyanate component and a silane coupling agent component.

When the gas barrier coating layer 14 is measured using a time-of-flight secondary ion mass analyzer (TOF-SIMS), a silicon oxide component, vinyl alcohol component, isocyanate component, and silane coupling agent component are detected. TOF-SIMS refers to surface spectrometry for measuring a mass spectrum of secondary ions generated when a surface is irradiated with ions to obtain information on constituent elements or chemical structure of the surface.

The gas barrier coating layer 14 may contain a known additive, e.g., clay minerals such as colloidal silica or smectite, a stabilizer, colorant, or viscosity modifier to an extent that the advantageous effects of the present invention are not impaired, from the perspectives of adhesion to the adjacent layer, wettability, and of minimizing the occurrence of cracking due to contraction.

The gas barrier coating layer 14 is preferred to have a thickness in the range of 0.01 µm to 50 µm. If the thickness of the gas barrier coating layer 14 is not less than the lower limit, good gas barrier properties can be easily achieved. If the thickness of the gas barrier coating layer 14 is not more than the upper limit, the occurrence of cracking can be easily minimized.

The method of forming the gas barrier coating layer 14 is not particularly limited. For example, the method may be one in which the components mentioned above are mixed in a solvent and applied onto the vapor deposition metal oxide layer 13, followed by drying. If a metal alkoxide is used as the silicon oxide component, the metal alkoxide may be difficult to uniformly disperse in an aqueous solvent, and therefore may be hydrolyzed before use.

The coating method and the drying method are not particularly limited, either. For example, methods similar to those mentioned for forming the primer layer 12 may be used.

The adhesive layer 20 includes a layer that contains maleic anhydride graft polymerized polypropylene (termed "modified PP" hereinafter) as a main component.

The modified PP is a polypropylene obtained by graft modifying a polypropylene with a maleic anhydride. Examples of the polypropylene of the modified PP may include homo polypropylene, block polypropylene, or random polypropylene, and a propylene-a olefin copolymer. The α-olefin may be ethylene, 1-butene, or the like.

The melting point of the modified PP is not particularly limited and may be appropriately determined, but is preferred to be 100 °C or more from the perspective of retort resistance.

The modified PP has a maleic anhydride graft ratio set to 0.1 wt% to 1 wt%.

If the maleic anhydride graft ratio is less than 0.1 wt%, sufficient adhesion strength is not necessarily achieved with the gas barrier film 10, which means that there is a high probability of delamination occurring during sterilization or the like.

If the maleic anhydride graft ratio exceeds 1 wt%, resin characteristics may become unstable. Specifically, the reaction catalyst used when a polypropylene is grafted may promote decomposition of the PP resin, and accordingly, the molecular weight may be reduced and the melt flow rate (MFR) be increased, resultantly impairing film formation suitability. Consequently, the adhesive layer formed may have a low film strength, and thus a sufficient adhesion strength may not necessarily be achieved.

The adhesive layer 20 is preferred to have a thickness in the range of 1 µm to 30 µm, and more preferably 1 µm to 15 µm. If the thickness of the adhesive layer 20 is not less than the lower limit, delamination can be easily minimized between the gas barrier film 10 and the thermoplastic resin layer 30. If the thickness of the adhesive layer 20 is not more than the upper limit, good thermal conductivity may be provided during processing after lamination, and thus a suitable lamination strength can be achieved.

The adhesive layer 20 may have a layer not containing a modified PP on the thermoplastic resin layer 30 side. For example, a polypropylene layer having good adhesion with a modified PP may be provided, and this polypropylene layer may be adhered to the thermoplastic resin layer 30.

The thermoplastic resin layer 30 is a layer whose surfaces are heat-sealed when forming a packaging container using the laminate film 1, and accordingly may also be called a sealant layer. The thermoplastic resin forming the thermoplastic resin layer 30 may be a resin having heat fusibility. Examples thereof may include a linear low density polyethylene (LLDPE), polyethylene, polypropylene, epoxy resin (EP), ethylene-vinyl acetate copolymer, ethylene-methacrylic acid copolymer, ethylene-methacrylic acid ester copolymer, ethylene-acrylic acid copolymer, ethylene-acrylic ester copolymer, and metal crosslinked products thereof. Of these, polypropylene or heat resistant LLDPE is preferred from the perspective of retort sterilization suitability or the like when packaging food. These thermoplastic resins may be used singly or in combination of two or more.

The thermoplastic resin layer 30 may have a thickness that is determined as appropriate depending on the purpose, but may generally have a thickness in the range of 15 µm to 200 µm.

A laminate film 1 having the above configuration can be produced by laminating an adhesive layer 20 and a thermoplastic resin layer 30 on a gas barrier coating layer 14 of a gas barrier film 10.

The adhesive layer 20 may be formed by melt extrusion on the gas barrier coating layer 14. Alternatively, the adhesive layer 20 may be formed by applying a liquid adhesive containing a modified PP onto the gas barrier coating layer 14, followed by drying to remove the solvent. In the former method, the adhesive layer 20 and the thermoplastic resin layer 30 may be simultaneously laminated by coextrusion. In the latter method, a resin film serving as the thermoplastic resin layer 30 may be laminated on the adhesive layer 20 by heat lamination.

The solvent used for the liquid adhesive may be a known solvent in which a modified PP can be dispersed or dissolved. For example, the solvent may be toluene (TOL), methyl ethyl ketone (MEK), methylcyclohexane (MCH), ethyl acetate (EA), n-propyl acetate (NPAC), or the like.

The coating method for the liquid adhesive is not particularly limited, but may, for example, be the same method as one used for forming the primer layer 12. The drying method after coating is not also particularly limited, but may, for example, be the same drying method as one used for drying the primer layer 12.

When the completed laminate film 1 is folded or two films are used and the thermoplastic resin layers 30 facing each other are heat-sealed along the peripheral edge of the laminated film(s), the laminate film(s) can be formed into a pouch to form a packaging container of the present embodiment.

According to the laminate film 1 of the present embodiment, the adhesive layer 20 includes a layer containing a modified PP as a main component, and the modified PP has a maleic anhydride graft ratio that is set to the range of 0.1 wt% to 1 wt%. Accordingly, a long curing time is not required, and a laminate film can be produced in a short time. Furthermore, the laminate film is not damaged during curing due to tightening of the film near the winding core.

In addition, if the adhesive layer 20 is formed by coextrusion, the laminate film 1 of the present embodiment may be superior from a hygiene or environmental perspective because no organic solvent is used when forming the adhesive layer 20.

Since the maleic anhydride graft ratio is set to the range of 0.1 wt% to 1 wt% in the adhesive layer 20, high adhesion can be achieved whether or not the gas barrier film has a gas barrier coating layer.

The configuration of the laminate film of the present embodiment should not be limited to the configuration described above.

Fig. 2 shows a laminate film 1A as an example of a modification, including no primer layer. A gas barrier film 10A includes a substrate film 11 whose adhesive layer side first surface 11a is plasma-treated, with a vapor deposition metal oxide layer 13 and a gas barrier coating layer 14 laminated thereon. Due to the first surface 11a being plasma-treated, delamination between the substrate film layer 11 and the vapor deposition metal oxide layer 13 can be minimized, even if no primer layer is provided.

The plasma treatment is preferred to be one performed in a reactive ion etching (RIE) mode. For example, RIE treatment can be performed using a known hollow anode plasma treatment device.

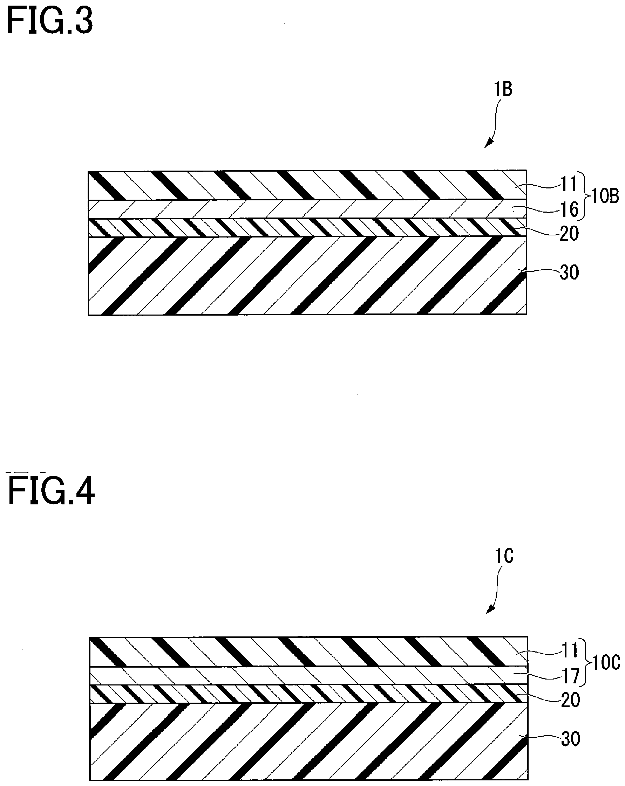

Fig. 3 shows a laminate film 1B as an example of a modification, including a gas barrier film 10B which includes a single-layer gas barrier layer 16 containing a polycarboxylic acid polymer in place of a vapor deposition metal oxide layer and a gas barrier coating layer. In the laminate film 1B, adhesion between the substrate film layer 11 and the gas barrier layer 16 is improved due to the presence of the polycarboxylic acid polymer. This may minimize delamination between the substrate film layer 11 and the gas barrier layer 16 and accordingly the laminate film 1B may be configured with the primer layer 12 omitted. The adhesive layer 20 having a maleic anhydride graft ratio in the range of 0.1 wt% to 1 wt% can also exert good adhesion with the gas barrier layer 16.

The polycarboxylic acid polymer refers to a polymer having two or more carboxyl groups per molecule.

Examples of the polycarboxylic acid polymer include homopolymers of α,β-monoethylenically unsaturated carboxylic acids; copolymers of at least two types of α,β-monoethylenically unsaturated carboxylic acids; copolymers of α,β-monoethylenically unsaturated carboxylic acids and other α,β-monoethylenically unsaturated carboxylic acids; and acidic polysaccharides containing a carboxyl group in a molecule such as of alginic acid, carboxymethyl cellulose and pectin. These polycarboxylic acid polymers may be used singly or in combination of two or more.

Examples of the α,β-monoethylenically unsaturated carboxylic acid include acrylic acid, methacrylic acid, itaconic acid, maleic acid, fumaric acid, and crotonic acid.

Examples of other ethylenically unsaturated monomers copolymerizable with the α,β-monoethylenically unsaturated carboxylic acids include saturated carboxylic acid vinyl esters such as ethylene, propylene, and vinyl acetate, alkyl acrylates, alkyl methacrylates, alkyl itaconates, acrylonitrile, vinyl chloride, vinylidene chloride, vinyl fluoride, vinylidene fluoride, and styrene.

If the polycarboxylic acid polymer is a copolymer of a α,β-monoethylenically unsaturated carboxylic acid and any other ethylenically unsaturated monomers, the α,β-monoethylenically unsaturated carboxylic acid is preferred to have a copolymerization ratio of 60 mol% or more, more preferably 80 mol% or more, even more preferably 90 mol% or more, and most preferably 100 mol% from the perspective of gas barrier properties and water resistance.

If the polycarboxylic acid polymer is a polymer composed of only α,β-monoethylenically unsaturated carboxylic acid, such a polymer may be obtained by polymerizing at least one polymerizable monomer selected from the group consisting of acrylic acid, methacrylic acid, itaconic acid, maleic acid, fumaric acid, and crotonic acid. Such a polymer is preferred to be a polymer obtained by polymerizing at least one monomer selected from the group consisting of acrylic acid, methacrylic acid, and maleic acid, and more preferred to be polyacrylic acid, polymethacrylic acid, polymaleic acid, or a mixture thereof.

If the polycarboxylic acid polymer is an acid polysaccharide, alginic acid is preferred to be used as a monomer component. The polycarboxylic acid polymer may have a number average molecular weight that is not particularly limited. From the perspective of coatability, the number average molecular weight of polycarboxylic acid polymer is preferred to be in the range of 2,000 to 10,000,000, and more preferred to be 5,000 to 1,000,000.

In the gas barrier layer 16, other polymers may be mixed into the polycarboxylic acid polymer as long as the gas barrier properties are not impaired. For example, the gas barrier layer 16 may be made of a mixture of a polycarboxylic acid polymer and a polyalcohol.

Polyalcohols include low-molecular-weight compounds having two or more hydroxyl groups per molecule, and alcohol-based polymers. Polyalcohols include polyvinyl alcohols (PVAs), sugars, and starches. The low-molecular-weight compounds having two or more hydroxyl groups per molecule may include, for example, glycerin, ethylene glycol, propylene glycol, 1,3-propanediol, pentaerythritol, polyethylene glycol, propylene glycol, and the like.

PVA is preferred to be saponified at a ratio of 95% or more, and more preferably 98% or more. PVA may have an average polymerization degree that is preferred to be in the range of 300 to 1,500. From the perspective of compatibility with a polycarboxylic acid polymer, it is preferred that a vinyl alcohol-poly(meth)acrylic acid copolymer containing a vinyl alcohol as a main component is preferred to be used as a polyalcohol.

As sugars, monosaccharides, oligosaccharides, and polysaccharides are used. These sugars include sugar alcohols such as sorbitol, mannitol, dulcitol, xylitol, and erythritol, substitution products of sugar alcohols, and derivative forms of sugar alcohols, described in JP H07-165942 A. The sugars are preferred to be soluble in water, alcohol, or a mixed solvent of water and alcohol. Starches are included in the polysaccharides.

Specific examples of the starches include raw starches (unmodified starches) such as wheat starches, corn starches, potato starches, tapioca starches, rice starches, sweet potato starches, and sago starches, and various processed starches. Specific examples of the processed starches include physically modified starches, enzyme-modified starches, chemically modified starches, and grafted starches obtained by graft-polymerizing monomers with starches. Of these starches, water soluble processed starches obtained by hydrolyzing potato starches with acid, and sugar alcohols in which a terminal group (aldehyde group) of a starch has been replaced with a hydroxyl group are preferred. The starches may be aqueous materials. These starches may be used singly or in combination of two or more.

The mixing ratio (mass ratio) of polycarboxylic acid polymer to polyalcohol is preferred to be in the range of 99:1 to 20:80, more preferred to be 95:5 to 40:60, and even more preferred to be 95:5 to 50:50, from the perspective of achieving a packaging container having good oxygen gas barrier properties even under high humidity conditions.

The gas barrier layer 16 may be formed, for example, by applying a coating liquid 1 containing a polycarboxylic acid polymer and a solvent, or a coating liquid 2 containing a polycarboxylic acid polymer, a polyalcohol, and a solvent onto a substrate film, and evaporatively drying the solvent. Alternatively, the gas barrier layer 16 may be formed by applying a coating liquid containing a monomer for forming a polycarboxylic acid polymer onto a substrate film, and applying ultraviolet light or electron beam to the coating to induce polymerization to obtain a polycarboxylic acid polymer. Alternatively, the gas barrier layer 16 may be formed by depositing the above monomer onto a substrate film, while simultaneously applying an electron beam thereto for polymerization to obtain a polycarboxylic acid polymer.

The coating liquid 1 can be prepared by dissolving or dispersing a polycarboxylic acid polymer into a solvent. The solvent is not particularly limited, but may be any solvent as long as a polycarboxylic acid polymer can be uniformly dissolved or dispersed therein. Specific examples of the solvent may include water, methyl alcohol, ethyl alcohol, isopropyl alcohol, dimethylsulfoxide, dimethylformamide, and dimethylacetamide. The solvent is preferred to be a non-aqueous solvent, or a mixture of a non-aqueous solvent with water. The concentration of a polycarboxylic acid polymer in the coating liquid 1 is preferred to be in the range of 0.1 mass% to 50 mass%.

The method of obtaining the coating liquid 2 is not particularly limited. Specific examples of the method of obtaining the coating liquid 2 may include a method in which individual components are dissolved in a solvent, a method in which solutions of individual components are mixed, and a method in which a monomer containing a carboxyl group is polymerized in a polyalcohol solution and, as desired, the obtained polymer is neutralized with alkali. Specific examples of the solvent include water, alcohol, and a mixture of water and alcohol. The coating liquid 2 is preferred to have a solid content concentration in the range of 1 mass% to 30 mass%.

As long as oxygen gas barrier properties are not impaired, the coating liquid 1 or the coating liquid 2 may additionally contain, as appropriate, other polymers, a softener, plasticizer (excepting low-molecular-weight compounds having two or more hydroxyl groups per molecule), stabilizer, antiblocking agent, adhesive, and inorganic layered compound such as montmorillonite.

From the perspective of oxygen gas barrier properties, the coating liquid 1 may additionally contain a compound containing monovalent and/or divalent metal. The monovalent and/or divalent metal may specifically be sodium, potassium, zinc, calcium, magnesium, copper, or the like. The compound containing monovalent and/or divalent metal may specifically be sodium hydrate, zinc oxide, calcium hydrate, calcium oxide, or the like.

The additive amount of the compound containing monovalent and/or divalent metal in the coating liquid 1 is preferred to be in the range of 0 mol% to 70 mol%, and more preferred to be 0 mol% to 50 mol%, relative to the carboxyl groups of the polycarboxylic acid polymer.

To improve oxygen gas barrier properties, the coating liquid 2 may be applied to the substrate film and dried, and the dried coating may be heat treated. In this case, a water soluble alkali metal compound, or a metal salt of inorganic or organic acid may be appropriately added when preparing the coating liquid 2 to mitigate the heat treatment conditions. The metal may specifically be alkali metal, such as lithium, sodium, potassium, or the like.

Specific examples of the metal salt of inorganic or organic acid may include lithium chloride, sodium chloride, potassium chloride, sodium bromide, sodium phosphinate (sodium hypophosphite), disodium hydrogen phosphate, disodium phosphate, sodium ascorbate, sodium acetate, sodium benzoate, and sodium hyposulfite. Of these metal salts, phosphine acid metal salts (hypophosphorous acid metal salts), such as sodium phosphinate (sodium hypophosphite), and calcium phosphinate (calcium hypophosphite), are preferred. The additive amount of a metal salt of inorganic or organic acid is preferred to be in the range of 0.1 parts by mass to 40 parts by mass, and more preferred to be 1 part by mass to 30 parts by mass, relative to 100 parts by mass solid content of the coating liquid 2.

The alkali metal compound may specifically be lithium hydroxide, sodium hydroxide, potassium hydroxide, or the like. The additive amount of the alkali metal compound is preferred to be in the range of 0 mol% to 30 mol%, relative to the carboxyl groups of the polycarboxylic acid polymer contained in the coating liquid 2.

The coating method for the coating liquid 1 or the coating liquid 2 may, for example, be a method using a device such as an air knife coater, kiss roll coater, metering bar coater, gravure roll coater, reverse roll coater, dip coater, die coater, or a spray, or a combination of these devices.

The method of evaporatively drying the solvent may, for example, be blowing hot air using a device such as an arch dryer, straight bath dryer, tower dryer, floating dryer, drum dryer, or an infrared dryer, or a combination of these devices, or a method using infrared irradiation, natural drying, drying in an oven, or the like.

The gas barrier layer 16 is preferred to have a thickness of 10 µm or less, more preferably 5 µm or less, and even more preferably 1 µm or less.

A coating layer containing a zinc compound may be formed on the gas barrier layer 16.

Examples of the zinc compound may include an oxide, hydroxide, carbonate, organic acid salt, or inorganic acid salt of zinc. As the zinc compound, zinc oxide, zinc hydroxide, zinc carbonate, zinc acetate, or zinc phosphate is preferred. Zinc has low toxicity, and zinc sulfide (white) produced by reaction of zinc with hydrogen sulfide, which is the cause of retort odor, does not affect the appearance of the packaging container.

The zinc compound is preferred to be in particulate form. From the perspective of coating suitability and dispersion in a solvent, the zinc oxide particles are preferred to have an average particle size of 5 µm or less, more preferably 1 µm or less, and even more preferably 0.1 µm.

The content of zinc in the zinc compound per 1 m² of the coating layer is preferred to be 32.7 mg or more. If the content of the zinc compound is 32.7 mg or more, the effect of absorbing retort odor may be pronounced, and the effect for the zinc compound to absorb hydrogen sulfide can be easily perceived by human senses. The content of zinc in the zinc compound per 1 m² is more preferred to be 65.4 mg or more, even more preferred to be 131 mg or more, and most preferred to be 196 mg or more. As the content of the zinc compound increases, the effect of absorbing retort odor increases; however, the flavor of the contents packed may be impaired. For example, if food placing an importance on the flavor derived from a sulfur-containing compound, e.g., garlic-flavored food, is packed in a container containing a large amount of zinc compound, the flavor of this food may be impaired. Accordingly, the content of the zinc compound may be appropriately controlled depending on the contents.

The coating layer containing a zinc compound is preferred to have a thickness in the range of 0.1 µm to 10 µm, more preferably 0.1 µm to 2 µm, and even more preferably 0.1 µm to 1 µm. If the thickness of the coating layer is not more than the lower limit, the thickness of the coating layer is likely to be stably retained. If the thickness of the coating layer is not more than the upper limit, productivity of the coating layer is likely to be enhanced, and cohesive fracture is less likely to occur in the coating layer.

The method of forming a coating layer containing a zinc compound is not particularly limited, but may be a method, for example, in which a coating agent containing a zinc compound and a solvent or dispersive medium is applied to the gas barrier layer 16.

Specific examples of the solvent or dispersive medium may include water, methyl alcohol, ethyl alcohol, isopropyl alcohol, n-propyl alcohol, n-butyl alcohol, n-pentyl alcohol, dimethyl sulfoxide, dimethyl formamide, dimethyl acetamide, toluene, hexane, heptane, cyclohexane, acetone, methyl ethyl ketone, diethyl ether, dioxane, tetrahydrofuran, ethyl acetate, and butyl acetate. From the perspective of coatability or productivity, the solvent or dispersive medium is preferred to be methyl alcohol, ethyl alcohol, isopropyl alcohol, toluene, ethyl acetate, or water.
These solvents or dispersive media may be used singly or in combination of two or more.

The coating agent may additionally contain additives, as appropriate, such as a resin, surfactant, softener, stabilizer, film-forming agent, anti-blocking agent, and adhesive.

The resin may be a coating resin, such as an alkyd resin, melamine resin, acrylic resin, soluble nitrocellulose, urethane resin, polyester resin, phenol resin, amino resin, fluororesin, or epoxy resin.

From the perspective of dispersion of the zinc compound, it is preferred that a dispersant is added to the coating agent. Specific examples of the dispersant may include acrylic amide, acrylic acid, acrylic acid ester, neutralized acrylic acid, acrylonitrile, adipic acid, adipic acid ester, neutralized adipic acid, azelaic acid, abietic acid, amino dodecanoic acid, arachidic acid, allylamine, arginine, arginine acid, albumin, ammonia, itaconic acid, itaconic acid ester, neutralized itaconic acid, ethylene oxide, ethylene glycol, ethylenediamine, oleic acid, kaolin, casein, caprylic acid, caprolactam, xanthane gum, citric acid, glycine, cristobalite, glycerin, glycerin ester, glucose, crotonic acid, filicic acid, saccharose, salicylic acid, cycloheptene, oxalic acid, starch, stearic acid, sebacic acid, cellulose, ceresin, sorbitan fatty acid ester (sorbitan oleate, sorbitan stearate, sorbitan palmitate, sorbitan behenate, or sorbitan laurate), sorbitol, sorbic acid, talc, dextrin, terephthalic acid, dolomite, cellulose nitrate, urea, vermiculite, palmitic acid, pinene, phthalic acid, fumaric acid, propionic acid, propylene glycol, hexamethylendiamine, pectin, behenic acid, benzyl alcohol, benzoic acid, benzoic acid ester, benzoguanamine, pentaerythritol, bentonite, boracic acid, polydimethylsiloxane, polyvinyl alcohol, mica, maleic acid, maleic acid ester, neutralized maleic acid, malonic acid, mannitol, myristic acid, methacrylic acid, methylcellulose, palm oil, eugenol, butyric acid, lignocellulose, lysine, malic acid, phosphoric acid, lecithin, rosin, wax, polymers of these materials, and copolymers of these materials.

From the perspective of coating suitability, the content of the coating agent in the zinc compound is preferred to be in the range of 1 mass% to 50 mass%.

The coating method for the coating agent is not particularly limited, but may, for example, be the same coating method as one used for the coating liquid 1 or the coating liquid 2 described above.

The drying method after applying the coating agent is not particularly limited, but may, for example, be the same drying method as one used for the coating liquid 1 or the coating liquid 2 described above. Drying conditions are not also particularly limited. Drying temperature is preferred to be in the range of 40°C to 350°C, more preferred to be 45°C to 325°C, and even more preferred to be 50°C to 300°C. Drying time is preferred to be in the range of 0.5 seconds to 10 minutes, more preferred to be 1 second to 5 minutes, and even more preferred to be 1 second to 1 minute.

Fig. 4 shows a laminate film 1C as an example of a modification, including a gas barrier film 10C which includes a gas barrier layer 17 containing a reactant of a metal oxide and a phosphorus compound instead of a vapor deposition metal oxide layer and a gas barrier coating layer. Use of a reactant of a metal oxide and a phosphorus compound can improve adhesion between the substrate film layer 11 and the gas barrier layer 17. This may easily reduce delamination between the substrate film layer 11 and the gas barrier layer 17 and accordingly the laminate film 1C may be configured with the primer layer 12 omitted.

The adhesive layer 20 having a maleic anhydride graft ratio in the range of 0.1 wt% to 1 wt% can also exert good adhesion with the gas barrier layer 17.

The gas barrier layer 17 may have a single-layer structure or a multilayer structure.

Metal atoms configuring the metal oxide may be those which have a valence of two or more (e.g., valence of 2 to 4, or valence of 3 to 4). Specifically, for example, the metal atoms may be of Mg, Ca, Zn, Al, Si, Ti, Zr, or the like. In particular, Al is preferred to be used as the metal atoms.

Metal atoms usually have hydroxyl groups at the surfaces.

For the metal oxide, a compound having hydrolyzable characteristic groups bonded to metal atoms may be used as a raw material. Specifically, the metal oxide may be synthesized by hydrolyzing and condensing this raw material as a hydrolyzed condensate of the compound.

For the hydrolytic condensation of a compound, solution phase synthesis, or specifically, a sol-gel method may be used.

The synthesized metal oxide is obtained in the form of fine particles. The shape of the particles of the metal oxide is not particularly limited, but may have, for example, a spherical, flat, polygonal, fibrous, or acicular shape. If the particles have a fibrous or acicular shape, barrier properties, and heat and water resistance, are further enhanced, which is preferred.

Also, the particle size of the metal oxide is not particularly limited, but may be nanometer size to submicron size. From the perspective of achieving much better barrier properties and transparency, the particle size of the metal oxide is preferred to be in the range of 1 nm to 100 nm.

Phosphorus compounds, e.g., phosphoric acid, polyphosphoric acid, phosphorus acid, phosphonic acid, or derivatives thereof, have one or more sites which can react with a metal oxide. The reactive sites may be halogen atoms directly bonded to phosphorus atoms, or oxygen atoms directly bonded to phosphorus atoms.

These halogen atoms or oxygen atoms can react by condensation with the hydroxyl groups present on surfaces of the metal oxide (hydrolytic condensation reaction) and can be bonded thereto.

The reactant of the metal oxide and the phosphorus compound can have a structure in which the particles of the metal oxide are bonded to each other via phosphorus atoms derived from the phosphorus compound.

Specifically, the functional groups (e.g., hydroxyl groups) present on surfaces of the metal oxide react by condensation with sites (e.g., halogen atoms directly bonded to phosphorus atoms, or oxygen atoms directly bonded to phosphorus atoms) of the phosphorus compound (hydrolytic condensation reaction) and can bond with each other.

The reaction product can be obtained, for example, by applying a coating liquid containing a metal oxide and a phosphorus compound to the surface of a substrate, and heat treating the coating. This may promote the reaction of the particles of the metal oxide being bonded to each other via the phosphorus atoms derived from the phosphorus compound.

The heat treatment temperature is preferred to be 110°C or more, more preferred to be 120°C or more, even more preferred to be 140°C or more, and most preferred to be to be 170°C or more. If the heat treatment temperature is not less than the lower limit, the reaction time may be shortened and productivity may be improved. The heat treatment temperature may depend on the type or the like of the substrate film layer 11, but is preferred to be 220°C or less, and more preferred to be 190°C or less.

The heat treatment can be performed in air, nitrogen atmosphere, argon atmosphere, or the like.

Heat treatment time is preferred to be 0.1 seconds to 1 hour, more preferred to be 1 second to 15 minutes, and even more preferred to be 5 seconds to 300 seconds.

The gas barrier layer 17 may contain polyvinyl alcohol, partially saponified polyvinyl acetate, polyethylene glycol, polyhydroxyethyl (meth) acrylate, polysaccharides such as starch, derivatives derived from polysaccharides, polyacrylic acid, polymethacrylic acid, (poly)acrylic acid/methacrylic acid, or salts thereof, an ethylene-vinyl alcohol copolymer, ethylene-maleic anhydride copolymer, styrene-maleic anhydride copolymer, isobutylene-maleic anhydride alternating copolymer, ethylene-acrylic acid copolymer, saponified ethylene-ethyl acrylate copolymer, or the like.

In the infrared absorption spectrum in the range of 800 cm⁻¹ to 1,400 cm⁻¹, the gas barrier layer 17 is preferred to have a peak infrared absorption wavenumber in the range of 1,080 cm⁻¹ to 1,130 cm⁻¹.

If the absorption peak wavenumber appears in a region of 800 cm⁻¹ to 1,400 cm⁻¹ where absorption derived from the bonding between several types of atoms and oxygen atoms can be generally observed, much better barrier properties, and heat and water resistance, can be developed. As metal atoms forming a metal oxide satisfying these requirements, Al or the like may be mentioned, for example.

The gas barrier layer 17 is preferred to have an upper limit thickness of 4.0 µm, more preferably 2.0 µm, even more preferably 1.0 µm, and most preferably 0.9 µm. If the thickness of the gas barrier layer 17 is reduced, size variation can be minimized during processing, such as printing, or laminating. Furthermore, flexibility may be increased in portions where gas barrier properties are exerted, and the mechanical properties can be brought closer to those of the substrate film layer 11.

The gas barrier layer 17 is preferred to have a lower limit thickness of 0.1 µm, and more preferably 0.2 µm.

The packaging container formed using the laminate film 1, 1A, 1B or 1C described above can secure high adhesion and high heat resistance, irrespective of the configuration of the layer exerting gas barrier properties. Consequently, if heat treatment, such as retort sterilization, is performed after contents are packed, the container can endure retort impact well, and the performance of the packaging container is less likely to be impaired during heat treatment. Furthermore, if the contents contain volatile substances, the occurrence of delamination can be sufficiently minimized. In other words, the packaging container described above has high retort resistance and content resistance.

The laminate film and the packaging container according to the above embodiment will be further described through examples. The technical scope of the present invention should not be construed as being limited by the following description.

### (Example 1)

The configuration of the gas barrier film 10 was applied as the gas barrier film of Example 1. Specifically, in the gas barrier film, a substrate film layer, a primer layer, a vapor deposition metal oxide layer, and a gas barrier coating layer were laminated in this order. After laminating a printing ink on the gas barrier coating layer, a material (A) (maleic anhydride graft polymerized polypropylene with a melting point of 106°C, density of 0.89 g/cm³ and MFR of 12 g/10 min) was laminated across the surface of the laminated printing ink by melt extrusion with a thickness of 20 µm to form an adhesive layer. Next, one surface of an unstretched polypropylene film (CPP with a thickness of 70 µm, product name ZK500 manufactured by Toray Advanced Film Co., Ltd.) for retort sterilization was corona discharge treated, and the treated surface was brought into contact with the adhesive layer and bonded thereto, followed by heat laminating a thermoplastic resin layer on the gas barrier film via the adhesive layer, thereby obtaining a laminate film of Example 1.

Two laminate films of Example 1 were overlapped with each other so that the thermoplastic resin layers were in contact with each other, and three peripheral edges of the films were heat sealed to obtain a packaging container (with a width of 100 mm and a length of 150 mm) of Example 1. After that, 100 g of liquid seasoning containing vinegar, oil, salt and spices was filled in the packaging container from an opening thereof, and then the upper part of the opening was heat sealed to seal the liquid seasoning therein.

The heat sealing was conducted at a temperature of 180°C, time of 3 seconds, and pressure of 0.3 MPa.

### (Example 2)

The configuration of the gas barrier film 10A was applied as the gas barrier film of Example 2. Specifically, in the gas barrier film, a substrate film layer (plasma treated), a vapor deposition metal oxide layer, and a gas barrier coating layer were laminated in this order. A laminate film and a packaging container of Example 2 were prepared as in Example 1 except that, as adhesives for forming an adhesive layer, a material (B) (maleic anhydride graft polymerized polypropylene with a melting point of 161°C, density of 0.88 g/cm³ and MFR of 9 g/10 min) and FL02C (polypropylene (not modified PP) with a melting point of 138°C, density of 0.89 g/cm³ and MFR of 18 g/10 min, manufactured by Japan Polypropylene Corporation) were used, and these adhesives were each laminated across the surface by melt extrusion with a thickness of 10 µm.

### (Example 3)

The configuration of the gas barrier film 10B was applied as the gas barrier film of Example 3. Specifically, in the gas barrier film, a substrate film layer, and a gas barrier layer 16 were laminated in this order. As an adhesive for forming an adhesive layer, UNISTOLE R-300 (product name), (maleic anhydride graft polymerized polypropylene with a melting point of 140°C, solid content concentration of 18 mass% and an average particle size of 10 µm, manufactured by Mitsui Chemicals, Inc.) was used, and this adhesive was applied to an upper part of the gas barrier film at a ratio of 1.5 g/m². Other than this, a laminate film and a packaging container of Example 3 were prepared as in Example 1.

### (Example 4)

The configuration of the gas barrier film 10C was applied as the gas barrier film of Example 4. Specifically, in the gas barrier film, a substrate film layer 11, and a gas barrier layer 17 were laminated in this order. A laminate film and a packaging container of Example 4 were prepared as in Example 1 except that, as adhesives for forming an adhesive layer, UNISTOLE R-300 and FL02C were used, and these adhesives were each laminated across the surface by melt extrusion with a thickness of 10 µm.

### (Comparative Example 1)

A laminate film and a packaging container of Comparative Example 1 were prepared as in Example 1 except that, as an adhesive for forming an adhesive layer, a material (C) (maleic anhydride graft polymerized polypropylene with a melting point of 140°C, density of 0.88 g/cm³ and MFR of 9 g/10 min) was used, and this adhesive was laminated across the surface by melt extrusion with a thickness of 20 µm.

### (Comparative Example 2)

A laminate film and a packaging container of Comparative Example 2 were prepared as in Comparative Example 1 except that, as an adhesive for forming an adhesive layer, a material (D) (maleic anhydride graft polymerized polypropylene with a melting point of 140°C, density of 0.88 g/cm³ and MFR of 20 g/10 min) was used.

The laminate films and the packaging containers of the examples and the comparative examples were evaluated as follows.

### (Quantitative analysis of maleic anhydride graft ratio)

For the adhesive of each example and comparative example, ¹H-NMR of the modified PP specimen and ¹H-NMR after methyl esterification of the maleic acid site were measured, and the maleic anhydride graft ratio was calculated in wt% from the difference in the peaks of ¹H-NMR

### (Measurement of lamination strength)

The laminate film of each of the examples and comparative examples was cut to a width of 15 mm as a test specimen. Using a tensile tester, an initial lamination strength (between the gas barrier film and the sealant layer) was measured under room temperature conditions (20°C, 30%RH) according to JIS K 6854.

### (Content resistance)

After storing the packaging containers of the examples and comparative examples at room temperature conditions (20°C, 30%RH) for half a year, a test specimen with a width of 15 mm was cut from an unbonded portion of each packaging container, and a lamination strength (between the gas barrier film and the sealant layer) after storage was measured similarly to the measurement of the initial lamination strength.

Furthermore, the appearance of each packaging container after storage was visually observed to examine for separation (delamination) between the gas barrier film and the sealant layer. The packaging containers were evaluated on a two-point scale. Specifically, if there was no delamination, the packaging container was evaluated to be good, and if there was delamination, the packaging container was evaluated to be poor.

### (Retort resistance)

After retort sterilizing the packaging containers of the examples and comparative examples at 121°C for 30 minutes, a test specimen with a width of 15 mm was cut from an unbonded portion of each packaging container, and a lamination strength (between the gas barrier film and the sealant layer) after retort sterilization was measured similarly to the measurement of the initial lamination strength.

Furthermore, the appearance of each packaging container after retort sterilization was visually observed to examine for delamination. The packaging containers were evaluated on a two-point scale. Specifically, if there was no delamination, the packaging container was evaluated to be good, and if there was delamination, the packaging container was evaluated to be poor.

### (Coating suitability)

During preparation of the laminate film of each of the examples and comparative examples, the state of each film was visually observed after applying a liquid adhesive (adhesive layer) to the gas barrier (gas barrier film) and evaluated according to the following criteria.

Good: Neither peripheral damage (edge damage) nor uneven thickness in adhesive observed

Poor: Either peripheral damage or uneven thickness in adhesive observed

The results are shown in Table 1. Table 1 also includes maleic anhydride graft ratios of the examples and comparative examples.

**[Table 1]**

| | | Ex. 1 | Ex. 2 | Ex. 3 | Ex. 4 | Comp. Ex. 1 | Com. Ex. 2 |
|---|---|---|---|---|---|---|---|
| Gas barrier film | | 10 | 10A | 10B | 10C | 10 | 10 |
| Maleic anhydride graft ratio (wt%) | | 0.13 | 0.14 | 0.78 | 0.78 | 0.05 | 1.5 |
| Initial lamination strength (N) | | 3 | 3.5 | 3.4 | 3.4 | 1.2 | 1.5 |
| (Content resistance) | Lamination strength (after storage, N) | 3.0 | 3.2 | 3.2 | 3.1 | 0.0 | 0.0 |
| | Appearance evaluation | Good | Good | Good | Good | Poor | Poor |
| (Retort resistance) | Lamination strength (after treatment, N) | 3.2 | 3.8 | 3.5 | 3.6 | 0.0 | 0.3 |
| | Appearance evaluation | Good | Good | Good | Good | Poor | Poor |
| (Coating suitability) | | Good | Good | Good | Good | Good | Poor |

As shown in Table 1, the examples and comparative examples, in which the adhesive layer contained a modified PP having a maleic anhydride graft ratio of a predetermined range (0.1 wt% to 1 wt%) as a main component, exhibited high initial lamination strength, and the packaging container was excellent both in content resistance and retort resistance.

In Comparative Example 1, in which the adhesive layer contained a modified PP having a maleic anhydride graft ratio lower than a predetermined range as a main component, initial lamination strength was weak, and the packaging container was insufficient both in content resistance and retort resistance. In Comparative Example 2, in which the adhesive layer contained a modified PP having a maleic anhydride graft ratio higher than a predetermined range as a main component, initial lamination strength, content resistance and retort resistance of the packaging container were insufficient, and coating suitability was poor.

An embodiment of the present invention has so far been described. However, the technical scope of the present invention should not be construed as being limited to the foregoing embodiments or the like. The constituent elements may be variously modified or omitted within a scope not departing from the spirit of the present invention.

### [Reference Signs List]

- 1, 1A, 1B, 1C:: Laminate film
- 10, 10A, 10B, 10C: Gas barrier film
- 11: Substrate film layer
- 12: primer layer
- 13: vapor deposition metal oxide layer
- 14: Gas barrier coating layer
- 16: Gas barrier layer
- 17: Gas barrier layer
- 20: Adhesive layer
- 30: Thermoplastic resin layer

## Claims

1. A laminate film, wherein:
a gas barrier film, an adhesive layer, and a thermoplastic resin layer are laminated in this order;
the adhesive layer includes a layer that contains maleic anhydride graft polymerized polypropylene as a main component; and
the maleic anhydride graft polymerized polypropylene has a maleic anhydride graft ratio of 0.1 wt% or more and 1 wt% or less.

2. The laminate film according to claim 1, wherein:
the gas barrier film includes a substrate film layer having an adhesive layer side surface on which a primer layer, a vapor deposition metal oxide layer, and a gas barrier coating layer are laminated in this order; and
the gas barrier coating layer contains
a silicon compound expressed by a general formula Si(OR¹)₄ (where R¹ is CH₃, C₂H₅ or C₂H₄OCH₃), or a hydrolysate thereof,
a silicon compound expressed by a general formula (R²Si(OR³)₃)ₙ (where R³ is CH₃, C₂H₅ or C₂H₄OCH₃, R² is an organic functional group, and n is 1 or more), or a hydrolysate thereof, and
a water-soluble polymer having a hydroxyl group.

3. The laminate film according to claim 1, wherein:
the gas barrier film includes a substrate film layer having an adhesive layer side surface on which a primer layer, a vapor deposition metal oxide layer, and a gas barrier coating layer are laminated in this order; and
the primer layer contains a composite composed of an acrylic polyol, an isocyanate compound, and one or more materials selected from a group consisting of trifunctional organosilanes and hydrolysates thereof.

4. The laminate according to claim 1, wherein the gas barrier film comprises:
a substrate film layer having a plasma treated adhesive layer side surface;
a vapor deposition metal oxide layer provided to the adhesive layer side surface of the substrate film layer; and
a gas barrier coating layer provided on the vapor deposition metal oxide layer.

5. The laminate film according to claim 1, wherein the gas barrier film is provided to the adhesive layer side of the substrate film layer, and includes a gas barrier layer that contains a polycarboxylic acid polymer

6. The laminate film according to claim 1, wherein the gas barrier film is provided to the adhesive layer side of the substrate film layer, and includes a gas barrier layer that contains a reactant of a metal oxide and a phosphorus compound.

7. A packaging container obtained by forming the laminate film according to any one of claims 1 to 6 into a pouch.
